(19) Europäisches Patentamt / European Patent Office / Office européen des brevets

(11) **EP 2 295 929 B1**

(12) **FASCICULE DE BREVET EUROPEEN**

(45) Date de publication et mention de la délivrance du brevet:
**06.11.2013 Bulletin 2013/45**

(51) Int Cl.:
*G01B 5/004* (2006.01)    *G01B 5/30* (2006.01)
*A01C 15/06* (2006.01)

(21) Numéro de dépôt: **10175837.3**

(22) Date de dépôt: **08.09.2010**

(54) **Machine agricole à ouvrant mobile, et procédé d'évaluation de la position d'un point mobile entre deux positions extrêmes**

Landwirtschaftliche Maschine mit beweglichem Öffnungselement und Einschätzungsverfahren der Position eines mobilen Punkts zwischen zwei Extrempositionen

Farming machine with mobile opening, and method for assessing the position of a mobile point between two end positions

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **10.09.2009 FR 0956200**

(43) Date de publication de la demande:
**16.03.2011 Bulletin 2011/11**

(73) Titulaire: **Agrotronix**
**62138 Douvrin (FR)**

(72) Inventeurs:
• **Lekeux, Olivier**
  **59553 Cuincy (FR)**
• **Venel, Sébastien**
  **62113 Labourse (FR)**
• **Theron, Maxime**
  **59231 Villers Plouich (FR)**

(74) Mandataire: **Novagraaf Technologies**
**122, rue Edouard Vaillant**
**92593 Levallois-Perret Cedex (FR)**

(56) Documents cités:
**WO-A1-00/58687     FR-A- 644 971**
**FR-A1- 2 617 588     US-A- 5 531 122**

## Description

L'invention concerne, de façon générale, à la fois la métrologie et la conception de machines agricoles dotées de fonctionnalités avancées.

Plus précisément, l'invention concerne, selon un premier aspect, une machine agricole, telle qu'un épandeur, comprenant un châssis et un ouvrant, cet ouvrant adoptant sélectivement une position fermée, une position ouverte, et une position intermédiaire choisie parmi une pluralité de positions intermédiaires possibles.

Pour permettre au conducteur de telles machines de contrôler la position de l'ouvrant autrement que par une observation visuelle directe rendue le plus souvent difficile, il est aujourd'hui devenu souhaitable de doter ces machines de moyens de mesure fournissant une évaluation aussi précise que possible de cette position.

Cependant, bien que l'homme du métier dans le domaine de la métrologie dispose de nombreux capteurs de mesure de déplacement, l'application d'un tel capteur aux machines agricoles pose des exigences particulièrement difficiles à satisfaire.

En effet, un capteur de mesure adapté à cette application doit être très robuste pour pouvoir résister à l'environnement et aux conditions de fonctionnement des machines agricoles, capable de mesurer des déplacements importants éventuellement supérieurs à un mètre et par exemple voisins de deux mètres, et présenter en outre une structure qui le rende simple à fabriquer et à réparer le cas échéant.

Dans ce contexte, l'invention a notamment pour but de proposer une machine dotée de moyens de mesure conçus pour satisfaire ces exigences.

A cette fin, la machine agricole de l'invention, par ailleurs conforme à la définition générique qu'en donne le préambule ci-dessus, est essentiellement caractérisée en ce qu'elle comprend en outre un indicateur de position fournissant une donnée représentative de la position effective de l'ouvrant, en ce que cet indicateur comprend un organe élastique, un capteur d'effort, et une unité logique, en ce que l'organe élastique présente, entre deux extrémités actives, une longueur variant en fonction de la position de l'ouvrant, cet organe élastique développant entre ses deux extrémités actives une force élastique variant de façon monotone avec sa longueur, en ce que le capteur d'effort est relié à l'une des extrémités de l'organe élastique et délivre sélectivement un signal de mesure représentatif de ladite force élastique et dont la valeur est liée à la position de l'ouvrant par une loi connue, et en ce que l'unité logique reçoit ledit signal de mesure du capteur, et élabore ladite donnée représentative de la position effective de l'ouvrant en appliquant à la valeur du signal de mesure une fonction inverse de ladite loi connue.

Dans le mode de réalisation préféré de l'invention, l'organe élastique est un ressort allongé dont la première extrémité active est liée au capteur lui-même lié au châssis, et dont la deuxième extrémité active est cinématiquement liée à un point mobile de l'ouvrant, ce ressort travaillant avantageusement en extension.

Il est notamment possible de prévoir que l'ouvrant soit une porte à guillotine montée mobile suivant une direction de coulissement, que la deuxième extrémité active du ressort présente la même amplitude de mouvement que l'ouvrant, et que le ressort s'étende, dans toutes les positions de l'ouvrant, sur une partie au moins de la dimension que présente cet ouvrant suivant sa direction de coulissement.

Pour optimiser la précision de l'évaluation de la position effective de l'ouvrant, il est souhaitable de faire en sorte que le ressort soit précontraint dans toutes les positions de l'ouvrant.

Il peut également être judicieux de doter l'unité logique d'une mémoire contenant au moins deux valeurs différentes de référence du signal de mesure du capteur, et deux valeurs respectives correspondantes de positions de référence de l'ouvrant, chacune des valeurs de référence du signal de mesure étant celle que produit le capteur d'effort pour la position de référence correspondante de l'ouvrant.

L'invention concerne également un procédé d'évaluation de la position effective d'un point de l'ouvrant de la machine agricole telle que précédemment définie, sélectivement soumis à un déplacement entre des première et deuxième positions extrêmes, ce procédé étant **caractérisé en ce qu'**il comprend les étapes consistant à :

- appliquer à un organe élastique une contrainte variant de façon monotone en fonction du déplacement du point entre ses positions extrêmes, cet organe élastique développant ainsi une force élastique résistante liée de façon biunivoque à toute position du point;
- produire un signal de mesure représentatif de ladite force élastique résistante et dont la valeur effective est liée à la position effective du point par une loi connue; et
- obtenir la valeur de la position effective dudit point en appliquant à ladite valeur effective du signal de mesure une fonction inverse de ladite loi connue.

De préférence, ce procédé comprend en outre une étape préliminaire consistant à mémoriser ladite fonction connue sous forme d'au moins deux valeurs de positions respectivement représentatives de positions de référence du point, et d'un nombre égal de valeurs respectives correspondantes du signal de mesure, constituant des valeurs de référence du signal de mesure.

Dans le cas le plus simple, la loi connue prend la forme d'une relation linéaire liant un déplacement quelconque du point à une variation correspondante de la valeur du signal de mesure.

Dans ce cas, l'étape consistant à obtenir la valeur de la position effective du point comprend avantageusement les opérations consistant ou équivalant à :

- calculer un coefficient de proportionnalité égal au rapport de la distance entre les première et deuxième positions de référence à l'écart entre les première et deuxième valeurs de référence du signal de mesure;

- calculer la distance entre la position effective du point et sa première position de référence comme étant égale au produit dudit coefficient de proportionnalité par l'écart entre la valeur effective et la première valeur de référence du signal de mesure; et

- calculer la valeur de la position effective du point comme étant égale à la somme de la première position de référence du point et de la distance entre la position effective du point et sa première position de référence.

D'autres caractéristiques et avantages de l'invention ressortiront clairement de la description qui en est faite ci-après, à titre indicatif et nullement limitatif, en référence au dessin annexé, dont l'unique figure illustre de façon partielle et schématique une machine conforme à l'invention.

Comme annoncé précédemment, l'invention concerne notamment une machine agricole comprenant un châssis 1 et un ouvrant 2.

Cet ouvrant 2 est conçu pour pouvoir adopter à volonté une position fermée, une position ouverte, et une position intermédiaire choisie parmi une pluralité de positions intermédiaires possibles formant éventuellement un continuum de positions intermédiaires.

Dans le mode de réalisation illustré, l'ouvrant 2 prend la forme d'une porte à guillotine montée mobile suivant une direction de coulissement D entre deux glissières parallèles 22, et par actionnement d'un ou plusieurs vérins 23.

L'invention est notamment particulièrement bien adaptée à la réalisation d'un épandeur, dont la porte d'épandage 2 doit pouvoir être placée à tout moment dans une position souhaitée et bien contrôlée.

A cette fin, la machine selon l'invention comprend en outre un indicateur de position 3 fournissant une donnée X représentative de la position effective de l'ouvrant 2 et incluant un organe élastique 31, un capteur d'effort 32, et une unité logique 33.

Comme le montre la figure, l'organe élastique 31 peut être constitué par un ressort hélicoïdal allongé 31 dont une extrémité 311 est liée au capteur 32, et dont l'autre extrémité 312 est cinématiquement liée à un point mobile 21 de l'ouvrant 2, le capteur 32 étant lui-même lié au châssis 1.

De préférence, le ressort 31 travaille en extension, et il est soumis à une précontrainte dans toutes les positions de l'ouvrant 2.

Dans le cas, qui correspond au mode de réalisation illustré, où l'extrémité 312 du ressort 31 est fixée à l'ouvrant 2 de manière à présenter la même amplitude de mouvement que cet ouvrant, il est judicieux de prévoir que ce ressort 31 s'étende, dans toutes les positions de l'ouvrant 2, sur une partie au moins de la dimension que présente cet ouvrant 2 suivant sa direction de coulissement D de manière que ce ressort présente une longueur 310 importante et qu'il puisse ainsi travailler en permanence dans sa zone d'élasticité, sans fatigue ni risque de déformation plastique.

Il serait néanmoins possible de relier par exemple l'extrémité 312 du ressort 31 à l'ouvrant 2 par l'intermédiaire d'un réducteur de mouvement tel qu'un palan, de manière qu'un déplacement de l'ouvrant 2 induise un déplacement correspondant de l'extrémité 312 du ressort 31 représenté par une fraction seulement du mouvement de l'ouvrant 2.

Bien que le mode de réalisation illustré reste le mode de réalisation préféré en raison de sa simplicité, de sa robustesse, et de la précision qu'il permet d'atteindre, il convient, quel que soit le mode de réalisation adopté, de faire en sorte que le ressort ou l'organe élastique 31 présente, entre ses deux extrémités 311 et 312, une longueur 310 qui varie en fonction de la position de l'ouvrant 2, et que ce ressort ou organe élastique 31 développe, entre ses deux extrémités 311 et 312, une force élastique F variant de façon monotone avec sa longueur 310.

Le capteur d'effort 32, qui est relié à l'extrémité 311 du ressort 31 comme indiqué précédemment, délivre en fonctionnement un signal de mesure S représentatif de la force élastique F développée par ce ressort 31, et dont la valeur Ms est liée à la position de l'ouvrant 2 par une loi connue.

Comme le comprendra l'homme du métier, le signal de mesure S pourra aussi bien être constitué par un signal analogique que par un signal numérique.

En outre, la valeur Ms attribuée au signal S pourra être constituée par toute caractéristique pertinente et exploitable de ce signal S, par exemple son amplitude, sa fréquence, ou encore le code numérique qu'il représente.

L'unité logique 33, qui reçoit le signal de mesure S délivré par le capteur 32, est conçue pour élaborer une donnée X représentative de la position effective de l'ouvrant 2 en appliquant à la valeur Ms du signal de mesure S une fonction inverse de la loi connue qui lie cette valeur Ms à la position de l'ouvrant 2.

Pour ce faire, il peut être utile de doter l'unité logique 33 d'une mémoire 331 qui contienne une pluralité de valeurs constituant la loi connue ou sa fonction inverse.

En outre, dans le cas où le capteur 32 délivre un signal de nature analogique, l'unité logique 33 est dotée d'un étage d'entrée assurant une conversion analogique-numérique.

Dans le cas le plus général, la mémoire 331 peut contenir une simple cartographie formée d'une multitude de couples de valeurs Ms du signal de mesure S et de valeurs X correspondantes de positions, la fonction de l'unité logique 33 se limitant alors à transmettre à sa mémoire 331 la valeur Ms effectivement produite par le capteur 32 et à lire dans cette mémoire 331 la valeur X de la position effective de l'ouvrant 2 correspondant à la valeur qui, au cours d'une étape préliminaire de calibration, a été stockée dans cette mémoire en correspondance avec la valeur Ms.

Cependant, alors qu'il est très difficile de fabriquer des ressorts dont la raideur présente une valeur prédéfinie avec une grande précision, il est en revanche aisé de disposer d'un ressort 31 développant une force élastique F liée de façon linéaire à son allongement, et d'un capteur 32 délivrant un signal S dont la mesure Ms soit liée de façon linéaire à la force F qui lui est appliquée.

Dans ces conditions, il est souhaitable que l'étape de calibration puisse être réalisée facilement, de préférence même à tout moment choisi après la fabrication de la machine, et soit donc restreinte à la mémorisation d'un nombre limité de couples de valeurs Ms et X.

En particulier, si le ressort 31 est homogène, autrement dit si la force élastique F développée par ce ressort 31 est une fonction linéaire du déplacement du point 21, et si la valeur Ms du signal de mesure S délivré par le capteur 32 est elle-même une fonction linéaire de la force F, il suffit de prévoir que la mémoire 331 contienne, en tant que références, deux valeurs différentes Ms1 et Ms2 du signal de mesure S, et deux valeurs respectives correspondantes X1 et X2 de positions de l'ouvrant 2, chacune des valeurs de référence Ms1 et Ms2 du signal de mesure S étant celle que produit le capteur d'effort 32 pour la position de référence correspondante X1 ou X2 de l'ouvrant 2.

En effet, dans ce cas, la force élastique F et la valeur X de la position du point 21 sont liées par la relation :

$$\Delta F = K1.\Delta X,$$

où K1 est un coefficient constant directement représentatif de la raideur du ressort 31 dans le cas où l'extrémité 312 du ressort subit un mouvement de même amplitude que le point 21, où $\Delta X$ représente un déplacement quelconque du point 21 entre ses positions extrêmes, et où $\Delta F$ représente la variation correspondante de la force élastique F développée par le ressort 31.

De même, en vertu de l'hypothèse de linéarité de la réponse du capteur 32 :

$$\Delta Ms = K2.\Delta F,$$

où K2 est un coefficient constant caractérisant la sensibilité du capteur, où $\Delta F$ représente une variation quelconque de la force élastique F développée par le ressort 31, et où $\Delta Ms$ représente la variation correspondante de la valeur Ms du signal S délivré par le capteur 32.

En posant K1.K2 = K, la loi connue qui lie un déplacement quelconque $\Delta X$ du point 21 à une variation correspondante $\Delta Ms$ de la valeur Ms du signal de mesure S s'exprime par la relation linéaire:

$$\Delta Ms = K.\Delta X.$$

En particulier, si on note:

$$\Delta Msr = Ms2-Ms1,$$

et:

$$\Delta Xr = X2-X1,$$

la relation:

$$\Delta Msr = K.\Delta Xr$$

conduit à:

$$1/K = \Delta Xr/\Delta Msr,$$

de sorte que:

$$\Delta X = (\Delta Xr/\Delta Msr).\Delta Ms$$

pour tout couple de variations correspondantes $\Delta X$ et $\Delta Ms$.

En particulier, pour toute position X du point 21 pour laquelle le capteur 32 délivre un signal S de valeur Ms :

$$X-X1 = (\Delta Xr/\Delta Msr).(Ms-Ms1),$$

soit encore :

$$X = (\Delta Xr/\Delta Msr).(Ms-Ms1) + X1.$$

L'étape qui consiste à obtenir la valeur X de la position effective du point 21 peut donc comprendre les opérations consistant ou équivalant à :

- calculer le coefficient de proportionnalité $(\Delta Xr/\Delta Msr)$,

qui est égal au rapport de la distance $\Delta Xr = X2-X1$ entre les deux positions de référence du point 21 à l'écart $\Delta Msr = Ms2-Ms1$ entre les deux valeurs de référence correspondantes Ms1 et Ms2 du signal de mesure S;

- calculer le produit $(\Delta Xr/\Delta Msr) . \Delta Ms$, où $\Delta Ms$ représente l'écart Ms-Ms1 entre la valeur effective Ms du signal de mesure S produit par le capteur lorsque le point 21 est dans la position de valeur X et la première valeur de référence Ms1 de ce signal de mesure S, ce produit $(\Delta Xr/\Delta Msr) . \Delta Ms$ représentant la distance $\Delta X = X-X1$ entre la position effective du point 21 et sa première position de référence; et

- calculer la valeur X de la position effective du point 21 comme étant égale à $X1 + \Delta X$, c'est-à-dire à la somme de la valeur de la première position X1 de référence du point 21 et de la distance $\Delta X$ entre la position effective du point et sa première position de référence.

La calibration de l'indicateur 3 est par exemple réalisée au moyen d'un bouton-poussoir 332 relié à l'unité logique 33 et dont l'actionnement déclenche une séquence de calibration programmée dans cette unité logique.

Comme il est souhaitable, pour optimiser la précision des mesures, que les positions de références de valeurs X1 et X2 soient fortement écartées l'une de l'autre, il est possible de prévoir que la position de référence de valeur X1 corresponde à l'état totalement fermé de l'ouvrant 2, et que la position de référence de valeur X2 corresponde à l'état totalement ouvert de cet ouvrant.

Dès lors que les valeurs X1 et X2 sont définies lors de la construction de l'ouvrant 2, ces valeurs peuvent être stockées dans la mémoire 331 à la fabrication de la machine.

Dans ce cas, la calibration peut donc se résumer à placer l'ouvrant 2 dans son état fermé, à actionner le bouton-poussoir 332 pour que l'unité logique 33 inscrive dans sa mémoire 331, en corrélation avec la valeur de position X1 de l'ouvrant 2, la valeur Ms1 correspondante du signal S délivré par le capteur 32, puis à placer l'ouvrant 2 dans son état ouvert, et à actionner une nouvelle fois le bouton-poussoir 332 pour que l'unité logique 33 inscrive dans sa mémoire 331, en corrélation avec la valeur de position X2 de l'ouvrant 2, la valeur Ms2 correspondante du signal S délivré par le capteur 32.

Néanmoins, dans le cas où l'unité logique 33 est également dotée d'un clavier de saisie, l'opération de calibration peut aussi être mise en oeuvre, après déclenchement au moyen du bouton-poussoir 332, en saisissant les valeurs X1 et X2 au clavier, les valeurs de Ms1 et Ms2 étant comme précédemment directement enregistrées par cette unité logique par réception du signal S en provenance du capteur 32.

Enfin, comme le comprendra aisément l'homme du métier, la position fermée de l'ouvrant 2 pourra être choisie comme origine des positions de cet ouvrant 2, auquel cas la valeur X1 sera prise comme étant égale à zéro.

Dans un mode de réalisation de l'invention pris à titre d'exemple non limitatif, le vérin 23 est un vérin hydraulique dont le piston présente une course utile de 1, 80 mètre.

Le ressort 31 est un ressort hélicoïdal présentant une longueur de 1, 50 mètre au repos et donc monté avec une précontrainte d'extension de l'ordre de 0, 30 mètre.

Et ce ressort est conçu pour subir un allongement supplémentaire de 2 mètres sans perdre son élasticité.

## Revendications

1. Machine agricole, telle qu'un épandeur, comprenant un châssis (1) et un ouvrant (2), cet ouvrant (2) adoptant sélectivement une position fermée, une position ouverte, et une position intermédiaire choisie parmi une pluralité de positions intermédiaires possibles, **caractérisée en ce qu'**elle comprend en outre un indicateur de position (3) fournissant une donnée (X) représentative de la position effective de l'ouvrant (2), **en ce que** cet indicateur comprend un organe élastique (31), un capteur d'effort (32), et une unité logique (33), **en ce que** l'organe élastique (31) présente, entre deux extrémités actives (311, 312), une longueur (310) variant en fonction de la position de l'ouvrant (2), cet organe élastique (31) développant entre ses deux extrémités actives (311, 312) une force élastique (F) variant de façon monotone avec sa longueur (310), **en ce que** le capteur d'effort (32) est relié à l'une des extrémités (311) de l'organe élastique (31) et délivre sélectivement un signal de mesure (S) représentatif de ladite force élastique (F) et dont la valeur (Ms) est liée à la position de l'ouvrant (2) par une loi connue, et **en ce que** l'unité logique (33) reçoit ledit signal de mesure (S) du capteur (32), et élabore ladite donnée (X) représentative de la position effective de l'ouvrant (2) en appliquant à la valeur (Ms) du signal de mesure (S) une fonction inverse de ladite loi connue.

2. Machine agricole suivant la revendication 1, **caractérisée en ce que** ledit organe élastique (31) est un ressort allongé (31) dont la première extrémité active (311) est liée au capteur (32) lui-même lié au châssis (1), et dont la deuxième extrémité active (312) est cinématiquement liée à un point mobile (21) de l'ouvrant (2).

3. Machine agricole suivant la revendication 2, **caractérisée en ce que** ledit ressort (31) travaille en extension.

4. Machine agricole suivant l'une quelconque des revendications 2 et 3, **caractérisée en ce que** ledit ouvrant (2) est une porte à guillotine montée mobile suivant une direction de coulissement (D), **en ce que** la deuxième extrémité active (312) du ressort (31) présente la même amplitude de mouvement que l'ouvrant (2), et **en ce que** le ressort (31) s'étend, dans toutes les positions de l'ouvrant (2), sur une partie au moins de la dimension que présente cet ouvrant (2) suivant sa direction de coulissement (D).

5. Machine agricole suivant l'une quelconque des revendications 2 à 4, **caractérisée en ce que** ledit ressort (31) est précontraint dans toutes les positions de l'ouvrant (2).

6. Machine agricole suivant l'une quelconque des revendications précédentes, **caractérisée en ce que** l'unité logique (33) comprend une mémoire (331) contenant au moins deux valeurs différentes de référence (Ms1, Ms2) du signal de mesure (S) du capteur (32), et deux valeurs respectives correspondantes (X1, X2) de positions de référence de l'ouvrant (2), chacune des valeurs de référence (Ms1, Ms2) du signal de mesure (S) étant celle que produit le capteur d'effort (32) pour la position de référence correspondante de l'ouvrant (2).

7. Procédé d'évaluation de la position effective d'un point (21) d'un ouvrant (2) d'une machine agricole selon l'une des revendications 1 à 6, l'ouvrant étant sélectivement soumis à un déplacement entre des première et deuxième positions extrêmes, ce procédé étant **caractérisé en ce qu'**il comprend les étapes consistant à

- appliquer à un organe élastique (31) une contrainte variant de façon monotone en fonction du déplacement du point (21) entre ses positions extrêmes, cet organe élastique (31) développant ainsi une force élastique résistante (F) liée de façon biunivoque à toute position du point (21);
- produire un signal de mesure (S) représentatif de ladite force élastique résistante (F) et dont la valeur effective (Ms) est liée à la position effective (X) du point (21) par une loi connue; et
- obtenir la valeur (X) de la position effective dudit point (21) en appliquant à ladite valeur effective (Ms) du signal de mesure (S) une fonction inverse de ladite loi connue.

8. Procédé d'évaluation suivant la revendication 7, **caractérisé en ce qu'**il comprend en outre une étape préliminaire consistant à mémoriser ladite fonction connue sous forme d'au moins deux valeurs (X1, X2) de positions respectivement représentatives de positions de référence du point (21), et d'un nombre égal de valeurs respectives correspondantes (Ms1, Ms2) du signal de mesure (S), constituant des valeurs de référence du signal de mesure.

9. Procédé d'évaluation suivant l'une quelconque des revendications 7 et 8, **caractérisé en ce que** ladite loi connue prend la forme d'une relation linéaire ($\Delta Ms = K.\Delta X$) liant un déplacement quelconque ($\Delta X$) du point (21) à une variation correspondante ($\Delta Ms$) de la valeur (Ms) du signal de mesure (S).

10. Procédé d'évaluation suivant les revendications 8 et 9, **caractérisé en ce que** l'étape consistant à obtenir la valeur (X) de la position effective du point (21) comprend les opérations consistant ou équivalant à :

- calculer un coefficient de proportionnalité ($\Delta Xr/\Delta Msr$) égal au rapport de la distance ($\Delta Xr=X2-X1$) entre les première et deuxième positions de référence à l'écart ($\Delta Msr=Ms2-Ms1$) entre les première et deuxième valeurs de référence (Ms1, Ms2) du signal de mesure (S);
- calculer la distance ($\Delta X=X-X1$) entre la position effective du point (21) et sa première position de référence comme étant égale au produit (($\Delta Xr/\Delta Msr$).$\Delta Ms$) dudit coefficient de proportionnalité ($\Delta Xr/\Delta Msr$) par l'écart ($\Delta Ms=Ms-Ms1$) entre la valeur effective (Ms) et la première valeur de référence (Ms1) du signal de mesure (S); et
- calculer la valeur (X) de la position effective du point (21) comme étant égale à la somme de la première position (X1) de référence du point (21) et de la distance ($\Delta X$) entre la position effective du point et sa première position de référence.

**Patentansprüche**

1. Landwirtschaftliche Maschine, wie zum Beispiel ein Streuer, umfassend einen Chassis (1) und ein Öffnungselement (2), wobei dieses Öffnungselement (2) gezielt eine geschlossene Position, eine geöffnete Position und eine unter mehreren möglichen Zwischenpositionen ausgewählte Zwischenposition einnimmt, **dadurch gekennzeichnet, dass** sie des Weiteren einen Positionsanzeiger (3) aufweist, der eine für die aktuelle Position des Öffnungselements (2) repräsentative Angabe (X) liefert, dass dieser Anzeiger ein elastisches Glied (31), einen Kraftsensor (32) und eine Logikeinheit (33) umfasst, dass das elastische Glied (31) zwischen zwei aktiven Enden (311, 312) eine Länge (310) aufweist, die in Abhängigkeit von der Position des Öffnungselements (2) variiert, wobei dieses elastische Glied (31) zwischen seinen beiden aktiven Enden (311, 312) eine elastische Kraft (F) erzeugt, die sich mit seiner Länge (310) monoton ändert, dass der Kraftsensor (32) mit einem der Enden (311) des elastischen Glieds (31) verbunden ist und gezielt ein für die elastische Kraft (F) repräsentatives Messsignal zuführt, dessen Wert (Ms) durch ein bekanntes Gesetz mit der Position des Öffnungselements (2) verbunden ist, und dass die Logikeinheit (33) das Messsignal (S) des Sensors (32) empfängt und unter Anwendung einer Umkehrfunktion des bekannten Gesetzes auf den Wert (Ms) des Messsignals (S) die für die aktuelle Position des Öffnungselements (2) repräsentative Angabe (X) erstellt.

2. Landwirtschaftliche Maschine nach Anspruch 1, **dadurch gekennzeichnet, dass** das elastische Glied (31) eine langgestreckte Feder (31) ist, deren erstes aktives Ende (311) mit dem Sensor (32) verbunden ist, der wiederum mit dem Chassis (1) verbunden ist, und deren zweites aktives Ende (312) kinematisch mit einem mobilen Punkt (21) des Öffnungselements (2) verbunden ist.

3. Landwirtschaftliche Maschine nach Anspruch 2, **dadurch gekennzeichnet, dass** die Feder (31) bei Ausdehnung Arbeit verrichtet.

4. Landwirtschaftliche Maschine nach Anspruch 2 oder 3, **dadurch gekennzeichnet, dass** das Öffnungselement (2) eine Hebetür ist, die in Schieberichtung (D) beweglich angebracht ist, dass das zweite aktive Ende (312) der Feder (31) das gleiche Bewegungsausmaß wie das Öffnungselement (2) hat und dass sich die Feder (31) in allen Positionen des Öffnungselements (2) über mindestens einen Teil der Abmessung erstreckt, die dieses Öffnungselement (2) in Schieberichtung (D) aufweist.

5. Landwirtschaftliche Maschine nach einem der Ansprüche 2 bis 4, **dadurch gekennzeichnet, dass** die Feder (31) in allen Positionen des Öffnungselements (2) vorgespannt ist.

6. Landwirtschaftliche Maschine nach einem der vorhergehenden Ansprüche, **dadurch gekennzeichnet, dass** die Logikeinheit (33) einen Speicher (331) aufweist, der mindestens zwei verschiedene Bezugswerte (Ms1, Ms2) des Messsignals (S) des Sensors (32) und zwei Werte (X1, X2), die jeweils den Bezugspositionen des Öffnungselements (2) entsprechen, enthält, wobei jeder der Bezugswerte (Ms1, Ms2) des Messsignals (S) jener ist, den der Kraftsensor (32) für die entsprechende Bezugsposition des Öffnungselements (2) erzeugt.

7. Verfahren zur Bewertung der aktuellen Position eines Punkts (21) eines Öffnungselements (2) einer landwirtschaftlichen Maschine nach einem der Ansprüche 1 bis 6, wobei das Öffnungselement gezielt einer Verschiebung zwischen der ersten und der zweiten Endposition unterzogen wird, wobei dieses Verfahren **dadurch gekennzeichnet ist, dass** es die folgenden Schritte umfasst:

- Beaufschlagen eines elastischen Glieds (31) mit einer Belastung, die sich in Abhängigkeit von der Verschiebung des Punkts (21) zwischen seinen Endpositionen monoton ändert, wobei dieses elastische Glied (31) somit eine elastische Widerstandskraft (F) erzeugt, die mit jeder Position des Punkts (21) eineindeutig verbunden ist;
- Erzeugen eines Messsignals (S), das für die elastische Widerstandskraft (F) repräsentativ ist und dessen Istwert (Ms) durch ein bekanntes Gesetz mit der aktuellen Position (X) des Punkts (21) verbunden ist; und
- Erhalten des Werts (X) der aktuellen Position des Punkts (21) durch Anwendung einer Umkehrfunktion des bekannten Gesetzes auf den Istwert (Ms) des Messsignals (S).

8. Bewertungsverfahren nach Anspruch 7, **dadurch gekennzeichnet, dass** es ferner einen vorgelagerten Schritt umfasst, der darin besteht, die bekannte Funktion in Form von mindestens zwei Werten (X1, X2) von jeweiligen Positionen, die für Positionen des Bezugspunkts (21) repräsentativ sind, und von einer Anzahl gleich den jeweiligen entsprechenden Werten (Ms1, Ms2) des Messsignals (S), die die Bezugswerte des Messsignals bilden, zu speichern.

9. Bewertungsverfahren nach Anspruch 7 oder 8, **dadurch gekennzeichnet, dass** das bekannte Gesetz die Form einer linearen Beziehung ($\Delta Ms = K.\Delta X$), die eine beliebige Verschiebung ($\Delta X$) des Punkts (21) mit einer entsprechenden Abweichung ($\Delta Ms$) des Werts (Ms) des Messsignals (S) verbindet, annimmt.

10. Bewertungsverfahren nach den Ansprüchen 8 und 9, **dadurch gekennzeichnet, dass** der Schritt, der aus dem Erhalt des Werts (X) der aktuellen Position des Punkts (21) besteht, die folgenden Operationen umfasst, die aus Folgendem bestehen oder zu Folgendem äquivalent sind:

- Berechnen eines Proportionalitätskoeffizienten ($\Delta Xr/\Delta Msr$) gleich dem Verhältnis der Distanz ($\Delta Xr = X2 - X1$) zwischen der ersten und der zweiten Bezugsposition zu dem Abstand ($\Delta Msr = Ms2 - Ms1$) zwischen dem ersten und dem zweiten Bezugswert (Ms1, Ms2) des Messsignals (S);
- Berechnen der Distanz ($\Delta X = X - X1$) zwischen der aktuellen Position des Punkts (21) und seiner ersten Bezugsposition als gleich dem Produkt ($\Delta Xr/\Delta MSr$) . $\Delta Ms$) des Proportionalitätskoeffizienten ($\Delta Xr/\Delta Msr$) und des Abstands ($\Delta Ms$

= Ms2 - Ms1) zwischen dem Istwert (Ms) und dem ersten Bezugswert (Ms1) des Messsignals (S); und

- Berechnen des Werts (X) der aktuellen Position des Punkts (21) gleich der Summe der ersten Position (X1) des Bezugspunkts (21) und der Distanz ($\Delta$X) zwischen der aktuellen Position des Punkts und seiner ersten Bezugsposition.

**Claims**

1. Agricultural implement, such as a spreader, comprising a chassis (1) and an opening panel (2), this opening panel (2) selectively adopting a closed position, an open position, and an intermediate position chosen from a plurality of possible intermediate positions, **characterized in that** it further comprises a position indicator (3) supplying a data item (X) indicative of the actual position of the opening panel (2), **in that** this indicator comprises an elastic member (31), a load sensor (32) and a logic unit (33), **in that** the elastic member (31) has, between two active ends (311, 312), a length (310) that varies as a function of the position of the opening panel (2), this elastic member (31) developing between its two active ends (311, 312) an elastic force (F) that varies monotonously with its length (310), **in that** the load sensor (32) is connected to one of the ends (311) of the elastic member (31) and selectively delivers a measurement signal (S) indicative of the said elastic force (F) and the value (Ms) of which is connected to the position of the opening panel (2) via a known law, and **in that** the logic unit (33) receives the said measurement signal (S) from the sensor (32) and formulates the said data item (X) indicative of the actual position of the opening panel (2) by applying an inverse function of the said known law to the value (Ms) of the measurement signal (S).

2. Agricultural implement according to Claim 1, **characterized in that** the said elastic member (31) is an elongate spring (31) the first active end (311) of which is connected to the sensor (32) itself connected to the chassis (1) and the second active end (312) of which is kinematically connected to a mobile point (21) of the opening panel (2).

3. Agricultural implement according to Claim 2, **characterized in that** the said spring (31) works in extension.

4. Agricultural machine according to either one of Claims 2 and 3, **characterized in that** the said opening panel (2) is a guillotine door mounted with the ability to move in a direction of sliding (D), **in that** the second active end (312) of the spring (31) has the same amplitude of movement as the opening panel (2), and **in that** the spring (31) extends, in all the positions of the opening panel (2), over at least part of the dimension that this opening panel (2) exhibits in its direction of sliding (D).

5. Agricultural implement according to any one of Claims 2 to 4, **characterized in that** the said spring (31) is preloaded in all the positions of the opening panel (2).

6. Agricultural implement according to any one of the preceding claims, **characterized in that** the logic unit (33) comprises a memory (331) containing at least two different reference values (Ms1, Ms2) for the measurement signal (S) from the sensor (32), and two corresponding respective values (X1, X2) for reference positions of the opening panel (2), each of the reference values (Ms1, Ms2) for the measurement signal (S) being the value that the load sensor (32) produces for the corresponding reference position of the opening panel (2).

7. Method for evaluating the actual position of a point (21) of an opening panel (2) of an agricultural implement according to one of Claims 1 to 6, the opening panel being selectively made to move between first and second extreme positions, this method being **characterized in that** it comprises the steps involving:

- applying to an elastic member (31) a stress that varies monotonously as a function of the movement of the point (21) between its extreme positions, this elastic member (31) thus developing a resistive elastic force (F) connected through a one-to-one relationship to any position of the point (21);
- producing a measurement signal (S) indicative of the said resistive elastic force (F) and the actual value (Ms) of which is connected to the actual position (X) of the point (21) by a known law; and
- obtaining the value (X) of the actual position of the said point (21) by applying a reverse function of the said known law to the said actual value (Ms) of the measurement signal (S).

8. Evaluation method according to Claim 7, **characterized in that** it further comprises a preliminary step involving storing the said known function in memory in the form of at least two values (X1, X2) of positions that are respectively indicative of reference positions of the point (21), and of an equal number of corresponding respective values (Ms1, Ms2) of the measurement signal (S) constituting reference values of the measurement signal.

9. Evaluation method according to either one of Claims 7 and 8, **characterized in that** the said known law takes the form of a linear relationship ($\Delta Ms = K. \Delta X$) connecting any movement ($\Delta X$) of the point (21) to a corresponding variation ($\Delta Ms$) of the value (Ms) of the measurement signal (S).

10. Evaluation method according to Claims 8 and 9, **characterized in that** the step involving obtaining the value (X) of the effective position of the point (21) comprises the operations that involve or are the equivalent of:

> - calculating a coefficient of proportionality ($\Delta Xr/\Delta Msr$) equal to the ratio of the distance ($\Delta Xr=X2-X1$) between the first and second reference positions to the difference ($\Delta Msr=Ms2-Ms1$) between the first and second reference values (Ms1, Ms2) of the measurement signal (S);
> - calculating the distance ($\Delta X=X-X1$) between the actual position of the point (21) and its first reference position as being equal to the product (($\Delta Xr/\Delta Msr$) .$\Delta Ms$) of the said coefficient of proportionality ($\Delta Xr/\Delta Msr$) times the difference ($\Delta Ms=Ms-Ms1$) between the actual value (Ms) and the first reference value (Ms1) of the measurement signal (S); and
> - calculating the value (X) of the actual position of the point (21) as being equal to the sum of the first reference position (X1) of the point (21) and of the distance ($\Delta X$) between the actual position of the point and its first reference position.

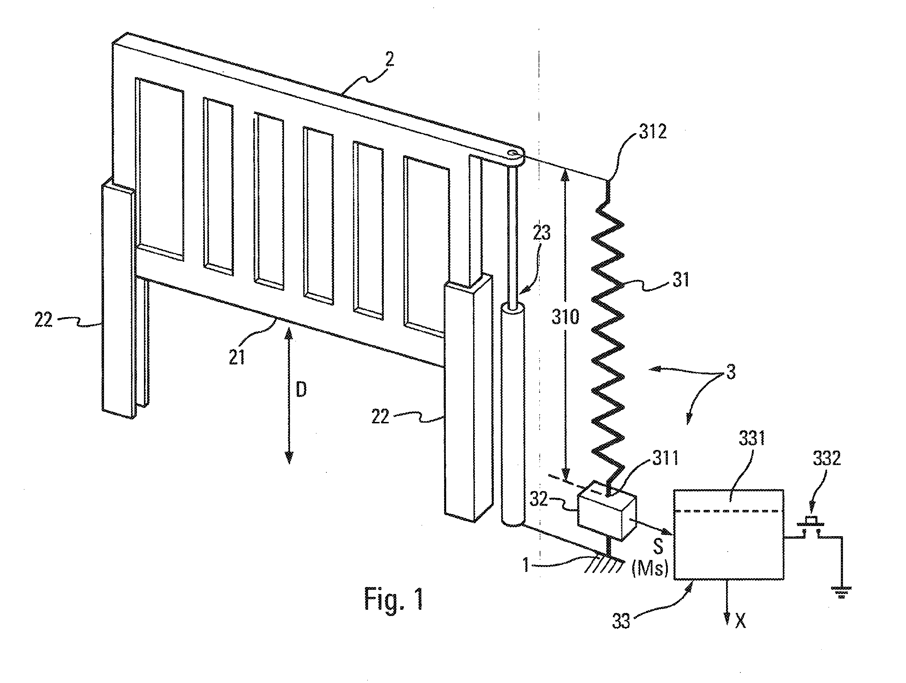

Fig. 1

EP 2 295 929 B1